# EUROPÄISCHE PATENTSCHRIFT

(11) **EP 2 867 559 B1**
(45) Veröffentlichungstag und Bekanntmachung des Hinweises auf die Patenterteilung: **24.02.2016**
(21) Anmeldenummer: 12780666.9
(22) Anmeldetag: 30.10.2012
(51) Int. Cl.: F16G 11/06, F16G 11/14, F16L 55/00

(54) **VERSCHLUSSVORRICHTUNG FÜR EINE SEILSCHLINGE, SICHERUNGSVORRICHTUNG, HOCHDRUCKEINRICHTUNG UND VERFAHREN ZUR MONTAGE DER SICHERUNGSVORRICHTUNG**
CLOSURE DEVICE FOR A CABLE SLING, SECURING DEVICE, HIGH-PRESSURE DEVICE, AND METHOD FOR ASSEMBLING THE SECURING DEVICE
DISPOSITIF DE VERROUILLAGE POUR UNE ÉLINGUE, DISPOSITIF DE SÉCURITÉ, DISPOSITIF HAUTE PRESSION ET PROCÉDÉ DE MONTAGE DU DISPOSITIF DE SÉCURITÉ

(30) Priorität: 03.04.2012 DE 102012006648
(43) Veröffentlichungstag der Anmeldung: 06.05.2015
(73) Patentinhaber: Schmitz, Hartmut, 57072 Siegen (DE)
(72) Erfinder: Schmitz, Hartmut, 57072 Siegen (DE)
(74) Vertreter: Grosse, Wolf-Dietrich Rüdiger
(86) Internationale Anmeldenummer: PCT/EP2012/004534
(87) Internationale Veröffentlichungsnummer: WO 2013/149631

(56) Entgegenhaltungen:
- DE-B- 1 171 802
- DE-U1-202004 003 544
- JP-U- 57 141 252
- JP-U- 57 155 345
- JP-U- 62 191 115
- US-A- 1 495 258

## Beschreibung

Die Erfindung betrifft eine Verschlussvorrichtung für eine Seilschlinge, die aus einem ersten und einem zweiten Seilabschnitt gebildet wird. Die Verschlussvorrichtung besteht u. a. aus einer Arretierhülse mit mindestens einer Bohrung zum Durchführen des ersten und des zweiten Seilabschnitts.

Neben der Verschlussvorrichtung und dem Verfahren betrifft die Erfindung auch eine Sicherungsvorrichtung und eine Hochdruckeinrichtung.

Die japanischen Druckschriften JP 57 141252 U, JP 57 155345 U und JP 62 191115 U offenbaren allesamt eine Verschlussvorrichtung für eine Schlinge eines Seiles, wobei die Seilschlinge aus einem ersten und einem zweiten Seilabschnitt gebildet ist, welche durch eine Arretierhülse und eine Spannhülse hindurchgeführt sind. In allen drei genannten Druckschriften erfolgt das Arretieren der beiden Seilabschnitte durch Verspannen der Spannhülse und der Arretierhülse gegeneinander. Damit kann die Spannhülse nicht zum Spannen der Schlinge verwendet werden, ohne dass sich die Schlinge lockert.

Eine weitere Verschlussvorrichtung ist aus der deutschen Auslegeschrift DE 11 71 802 B bekannt, wobei die Verschlussvorrichtung in Form eines Klemmkörpers ausgebildet ist. Der Klemmkörper enthält eine zentrale Bohrung zum Durchführen der beiden Seilabschnitte der Schlinge und er besitzt auf seiner äußeren Oberfläche Einschnitte zur Einführung und Festklemmung der Seilabschnitte. Auf diese Weise wird die Schlinge gegen Lockern gesichert.

Schließlich ist aus der US-Schrift US 1 495 258 A ebenfalls eine Verschlussvorrichtung für eine Seilschlinge bekannt, wobei zumindest einer der beiden Seilabschnitte in einer Bohrung einer Arretierhülse mit Hilfe konischer Klemmelemente fixiert wird. Ein Nachspannen der Seilschlinge mit Hilfe einer Spannhülse ist hier ebenfalls nicht vorgesehen.

Bei Hochdruckeinrichtungen, z. B. Hydraulikeinrichtungen die typischerweise eine Hochdruckarmatur mit einer angeschlossenen (Hochdruck-)Leitung aufweisen, besteht die Gefahr, dass sich die Leitung von der Hochdruckarmatur löst und dann unkontrolliert "umher schlägt". Dieses unerwünschte Ereignis wird auch als "Peitscheneffekt" bezeichnet.

Im Stand der Technik sind bereits zahlreiche Lösungsansätze für dieses Problem bekannt. Typischerweise wird ein Fangseil vorgesehen, welches mit einem Ende bzw. mit einer Schlinge um die (Hochdruck-)Leitung gelegt wird und mit seinem anderen Ende an der ortsfesten Hochdruckarmatur befestigt wird. Beispiele für derartige Fangseile für Hochdruckleitungen finden sich z. B. im Internet auf den Homepages diverser Anbieter, wie z. B. unter www.hsr.de oder unter www.dietzel-hydraulik.de. Bei den dort gezeigten Varianten ist das Fangseil typischerweise mit Hilfe einer Schlauchschelle an der (Hochdruck-)Leitung befestigt. Das Vorsehen der Schellen erfordert eine entsprechende Lagerhaltung und deren Montage an der (Hochdruck-)Leitung in räumlich beengter Umgebung und ist oftmals knifflig und zeitaufwendig.

Alternativ ist vorgesehen, ein Fangseil in Form einer Schlinge um die (Hochdruck-) Leitung zu legen, wie dies z. B. in den Gebrauchsmusterschriften DE 296 98 853 U1 oder DE 20 2004 003 544 U1 offenbart ist.

Wenn die Seilschlingen "von Hand" direkt um die Leitungen gelegt werden, wie dies gemäß den Gebrauchsmusterschriften vorgesehen ist, so sind sie in der Regel nicht ausreichend verschiebesicher an der Leitung befestigt. Der Grund dafür ist darin zu sehen, dass die Seilschlingen, typischerweise Drahtseilschlingen, aufgrund ihrer Steifigkeit nur tropfenförmig geformt sind und sich deshalb nicht um den gesamten Umfang der Leitung anlegen. Damit sich das Seil fest um den gesamten Umfang der Leitung legt, ist eine große Kraft aufzuwenden, die typischerweise nur mit Hilfe eines speziellen Werkzeugs aufgebracht werden kann.

Ausgehend von diesem Stand der Technik liegt der Erfindung die Aufgabe zugrunde, eine Verschlussvorrichtung, eine Sicherungsvorrichtung, eine Hochdruckeinrichtung und ein Verfahren zum Montieren der Sicherungsvorrichtung an eine Leitung dahingehend weiterzubilden, dass die Montage vereinfacht und die Montagezeit verkürzt werden kann.

Diese Aufgabe wird bezüglich der Verschlussvorrichtung durch den Gegenstand des Anspruchs 1 gelöst. Demnach ist die Verschlussvorrichtung dadurch gekennzeichnet, dass die Arretierhülse und die Spannhülse - mit durch beide Hülsen hindurchgeführten Seilabschnitten - in variabel einstellbarer Relativposition zueinander fixierbar sind zum Nachspannen der Seilschlinge um eine Leitung durch teilweises Aufschrauben der Verschraubung zwischen der Arretierhülse und der Spannhülse auf einen größeren Abstand und Seil-Sicherungsmittel zum Arretieren des ersten und des zweiten Seilabschnittes in der Arretierhülse so, dass sich die Seilschlinge nicht lockert.

Der Begriff "Leitung" meint primär flexible Leitungen, z. B. Schläuche, für ein Medium, sekundär aber auch Rohre. Insbesondere fallen auch Hochdruckschläuche, z. B. Hydraulikschläuche, unter den Begriff "Leitung", wobei "Hochdruck" jeden Druck größer als den Atmosphärendruck meint.

Der Begriff "Seilabschnitt" bezeichnet eine Teillänge des Seiles, welche eine halbe Seilschlinge bildet bis zu deren Wendepunkt. Eine Seilschlinge wird demnach durch zwei Seilabschnitte gebildet, die im Wendepunkt der Schlinge aneinander grenzen.

Der Vorteil der beanspruchten Verschlussvorrichtung besteht in ihrer Doppelfunktion: Die Arretierhülse ermöglicht ein Vorspannen der um die Leitung gelegten Seilschlinge mit anschließender Fixierung der Seilabschnitte der Schlinge in der Arretierthülse. Die Spannhülse ermöglicht in einem nachfolgenden Arbeitsschritt ein Nachspannen bzw. ein festeres Zuziehen der Schlinge bis auf ein gewünschtes Maß. Das Nachspannen wird ermöglicht durch die variabel einstellbare und fixierbare Relativposition von Arretierhülse und Spannhülse zueinander, dass heißt insbesondere durch die Möglichkeit zum Vergrößern des Abstandes der beiden Hülsen zueinander. Die Handhabung und Montage der Verschlussvorrichtung ist sehr einfach und mit nur geringem Zeitaufwand problemlos möglich, wie weiter unten bei der Beschreibung des erfindungsgemäßen Verfahrens erläutert wird. Für die Handhabung und Montage bedarf es vorteilhafterweise keines Spezialwerkzeuges, auch nicht zum Nachspannen. Schließlich ist die erfindungsgemäße Verschlussvorrichtung kompakt gebaut, so dass sie auch in beengten räumlichen Verhältnissen einfach und sicher gehandhabt werden kann.

Die Arretierhülse ist mit einem Außengewinde und die Spannhülse mit einem komplementären Innengewinde ausgebildet oder umgekehrt, so dass beide Hülsen miteinander verschraubbar sind. Die besagte Schraubverbindung erleichtert ganz wesentlich das Nachspannen der Seilschlinge, weil aufgrund der Schraubverbindung die Arretierhülse und die Spannhülse in ihrem axialen Abstand zueinander leicht veränderbar und fixierbar sind.

Mit Hilfe der Sicherungsmittel in der Arretierhülse wird sichergestellt, dass sich die Seilabschnitte insbesondere nicht derart verschieben können, dass sich die Schlinge lockert.

Gemäß einem ersten Ausführungsbeispiel weist die Arretierhülse und / oder die Spannhülse entweder jeweils einzelne Bohrungen oder eine gemeinsame Bohrung für den ersten und zweiten sowie ggf. optional auch für den dritten Seilabschnitt bzw. zur Aufnahme des zweiten freien Seilendes auf.

Vorteilhafterweise weist die Arretierhülse und /oder die Spannhülse an ihrer Außenseite in Längsrichtung der Bohrung einen Schlitz oder mehrere Schlitze auf, welcher / welche mit der mindestens einen Bohrung kommuniziert / kommunizieren, zum Einlegen von zumindest einem der Seilabschnitte in die Bohrung der Hülse. Der Schlitz vereinfacht insofern die Handhabung der Verschlussvorrichtung, als dass ein durch die Hülse zu führender Seilabschnitt nicht mit seiner Stirnseite in die Bohrung eingeführt werden muss, sondern stattdessen mit seinem Längsabschnitt in den Schlitz eingelegt werden kann. Insbesondere aufgedrehte Seilenden passen oftmals nicht in vorgesehene Bohrungen; dieses Problem wird durch das Einlegen der Seilabschnitte in den Schlitz umgangen.

Bei Ausführung der Arretierhülse ohne Schlitz werden die Seilenden durch zwei separate Bohrungen oder eine gemeinsame in der Arretierhülse geführt. Diese Variante ist die fertigungstechnisch Einfachste und Preisgünstigste. Für Schlauch-Erstausrüster, die günstigst herstellen müssen, würde diese Variante durchaus ausreichen, da sie ja die Seilschlinge über das Schlauchende schieben können. Der Schlauch wird erst anschließend eingebaut. Die Gesamtkonstruktion bleibt stabiler als mit Seitenschlitz.
Nachteil: In eingebautem Zustand lässt sich die Schlinge nicht mehr entfernen, ohne den Hochdruckschlauch an einer Stelle zu lösen. Es kann Öl etc. auslaufen.

Bei Ausführung der Arretierhülse mit zwei Bohrungen für den ersten und zweiten Seilabschnitt, wobei nur eine der beiden Bohrungen über einen Schlitz zur Außenseite der Hülse geöffnet bzw. zugänglich ist, gilt Folgendes: Die Seilschlinge kann auch um bereits eingebaute Hochdruckschläuche nachträglich angebracht oder von diesen entfernt werden. Diese Variante ist fertigungstechnisch einfacher und preisgünstiger herzustellen als die nachfolgend beschriebene Ausführung mit zwei Schlitzen. Die Gesamtkonstruktion ist stabiler als die Ausführung mit zwei Schlitzen. Die erfindungsgemäße Verschlussvorrichtung ist in geplanter Weise unverlierbar mit dem Stahlseil verbunden durch die verbleibende Durchgangsbohrung. Der Montagevorgang ist einfacher als bei der Ausführung mit zwei Schlitzen. Nachteil a: Das Stahlseil und die Verschlussvorrichtung können nicht als zwei separate Komponenten auf der Baustelle verarbeitet werden. Dadurch können größere Kosten für die Lagerhaltung entstehen.
Nachteil b: Die Gesamtkonstruktion ist instabiler als bei Ausführung ohne Schlitz.

Bei Ausführung der Arretierhülse mit zwei Bohrungen für den ersten und zweiten Seilabschnitt, wobei beide Bohrungen jeweils über einen eigenen Schlitz zur Außenseite der Hülse geöffnet sind, gilt Folgendes:
Diese Variante ist die "flexibelste" unter den genannten, weil es in demontiertem Zustand keinerlei feste Verbindung zwischen Stahlseil und Verschlussvorrichtung gibt. Die Lagerhaltungskosten sind dadurch am geringsten.
Nachteil a: Es könnte auf der Baustelle passieren, dass die Verschlussvorrichtung während des Zusammenbauens "herunterfällt". Je nachdem könnte das zu sehr unangenehmen Folgen führen: Praxisversuche haben auch gezeigt, dass diese Variante die am Umständlichsten zu montierende ist.
Nachteil b: Dies ist die teuerste Fertigungsvariante.
Nachteil c: Dies ist die "unstabilste" Variante.

Vorzugsweise ist zumindest eines der Seilsicherungsmittel in Form einer Madenschraube ausgebildet, welche quer zur Längsachse der Bohrung radial bis in die mindestens eine Bohrung der Arretierhülse einschraubbar ist zum Festspannen bzw. Festklemmen der Seilabschnitte in der mindestens einen Bohrung. Die Seil-Sicherungsmittel sind vorzugsweise ihrerseits wiederum mit Hilfe von geeigneten Sicherungsmitteln, z. B. einem zweiten Gewindestift gegen Lösen gesichert.

Vorteilhafterweise weist die mindestens eine Bohrung in der Arretierhülse an ihrem schlingenfernen Ende eine Aufweitung auf zur Aufnahme einer Endbegrenzungshülse des ersten oder zweiten Seilabschnitts der Seilschlinge. Wenn die Endbegrenzungshülse in die Aufweitung der Bohrung eingezogen ist, verhindert die Endbegrenzungshülse, dass sich das Seil in der Arretierhülse so verschieben kann, dass sich die Schlinge vergrößert. Vielmehr stellt die Endbegrenzungshülse im Zusammenwirken mit der Aufweitung sicher, dass die Seilschlinge auch in nachgespanntem Zustand nicht nachgibt bzw. sich nicht lockert.

Gemäß einem weiteren Ausführungsbeispiel weist die mindestens eine Bohrung in der Spannhülse an ihrem schlingenseitigen Ende und / oder die mindestens eine Bohrung in der Arretierhülse an ihrem schlingenfernen Ende eine Senkung auf. Die Senkung an dem schlingenseitigen Ende der Spannhülse verhindert vorteilhafterweise, dass ein Grat bzw. eine scharfe Kante der Bohrung der Spannhülse beim Nachspannen das Seil beschädigt. In analoger Weise verhindert die Senkung an dem schlingenfernen Ende der Arretierhülse, dass eine scharfe Kante bzw. ein Grat der Bohrung in der Arretierhülse das Seil beschädigt, wenn das Seil im Störungsfalle, d. h. wenn sich der Schlauch von der Armatur löst, mit einer Querkraft beaufschlagt wird, die zumindest teilweise quer zur Längsachse der Bohrung der Arretierhülse wirkt.

Optional weist die Spannhülse eine Innenhülse auf, durch welche die Seilabschnitte geführt sind. Aufgrund ihres gegenüber der Spannhülse verringerten Innendurchmessers bildet die Innenhülse einen verengten Kanal für die Seilabschnitte, wodurch das Verspannen der Seilschlinge auch bei kleinen Leitungsdurchmessern wirkungsvoller möglich wird.

Während des Spannvorganges, bei dem die Spannhülse gegenüber der Arretierhülse verschraubt und damit verdreht wird, kann es ohne Innenhülse zu einer Schädigung des Seiles durch Abrieb aufgrund einer Relativbewegung zwischen Spannhülse und Seil kommen.

Die Innenhülse ist in der Spannhülse frei drehbar gelagert. Dies hat den Vorteil, dass sich die Innenhülse, anders als die Spannhülse, während des Spannvorganges nicht mitdreht. Auf diese Weise wird die Relativbewegung zwischen Innenhülse und Seil und damit eine Beschädigung des Seiles durch Abrieb verhindert.

Die unerwünschte Relativbewegung zwischen Innenhülse und Seil wird weiterhin durch optionale Kerben an der schlingenseitigen Innenseite der Innenhülse wirkungsvoll verhindert, wenn die durch die Innenhülsen geführten Seilabschnitte schlingenseitig in diese Kerben eingreifen. Die Kerben entschärfen außerdem die Kante, mit welcher die Innenhülse auf das Seil einwirkt, weil die Kerben einen größeren Radius bzw. eine Senkung für das Seil bilden.

Die Innenhülse kann einen Längsschlitz aufweisen. Der Längsschlitz ermöglicht vorteilhafterweise das Einführen der Seilabschnitte in die Innenhülse, ohne dass die Seilschlinge geöffnet werden muss. Dies ist insbesondere vorteilhaft für ein Nachrüsten der Innenhülse bei Sicherungsvorrichtungen und Hochdruckeinrichtungen mit vorhandenen Seilschlingen.

Grundsätzlich gewährleistet alleine die Schraubverbindung bereits eine Sicherung des besagten relativen Abstandes der Hülsen zueinander. Um jedoch insbesondere auch bei dynamischer Belastung bzw. bei auftretenden Kräften eine Sicherung der Relativposition der Hülsen zueinander sicherzustellen, können Hülsensicherungsmittel, z. B. ebenfalls in Form von Madenschrauben vorgesehen sein.

Zur Sicherung der Seil-Sicherungsmittel und der Hülsen-Sicherungsmittel ihrerseits gegen Lösen können weitere Sicherungsmittel in Form von beispielsweise weiteren Gewindestiften vorgesehen sein zum Festklemmen der Sicherungsmittel.

Um die Seilabschnitte nicht durch den Kontakt mit den Stirnseiten der Madenschrauben zu beschädigen, ist es vorteilhaft, wenn an den Stirnseiten der Madenschrauben Halbschalen vorgesehen sind zum zumindest teilweisen Umschließen der Seilabschnitte. Mit Hilfe der Halbschalen wird die durch die Madenschrauben aufgebrachte Anpresskraft auf die Seilabschnitte auf eine größere Fläche verteilt und so lokal reduziert.

Alternativ zu den Halbschalen kann zwischen den Stirnseiten der Madenschrauben und dem festzuklemmenden Seil ein Metallplättchen vorgesehen sein, vorzugsweise aus Messing. Messing ist weniger hart als Stahl. Daraus resultiert der Effekt, dass sich das (Draht-)Seil unter dem Druck der angezogenen Madenschrauben auf der ihm zugewandten Seite des Messingplättchens unter Riefenbildung in das Messingplättchen einprägt. Dadurch wird vorteilhafterweise eine Beschädigung des (Draht-)Seiles, wie sie z. B. bei unmittelbarer Einwirkung der Stirnseite der Madenschrauben entstehen würde, wirkungsvoll verhindert. Das Einprägen des (Draht-)Seiles in das Messingplättchen beim Anziehen der Madenschrauben hat weiterhin den Effekt, dass der Drehwiderstand zwischen Messingplättchen und (Stahl-) Seil deutlich größer wird, als zwischen der Stirnseite der Madenschraube und der der Madenschraube zugewandten Seite des Messingplättchens. Durch das Einprägen des Seiles in das Messing wird somit weiterhin wirkungsvoll verhindert, dass sich das Messingplättchen bei einem Drehen / Anziehen der Madenschrauben mitdreht. Dies hat den Vorteil, dass eine Schädigung des Seiles durch Abrieb aufgrund einer Relativbewegung zwischen dem Messingplättchen und dem Drahtseil wirkungsvoll verhindert wird.

Wie oben bereits erwähnt, bedarf es zur Handhabung und Montage der Verschlusssicherung keines Spezialwerkzeuges. Allerdings bedarf es in der Regel eines handelsüblichen Hebelwerkzeugs, z. B. eines Maulschlüssels oder einer ähnlichen Vorrichtung, um das Seil bzw. die Seilschlinge mit Hilfe der Spannhülse nachzuspannen. Zu diesem Zweck sind am Umfang der Arretierhülse und / oder der Spannhülse vorteilhafterweise ein Sechskant, ein Zwei-Flach-Hakenlöcher und / oder ein Rändelrand ausgebildet zum Ansetzen eines geeigneten Hebelwerkzeugs.

Die oben genannte Aufgabe wird weiterhin durch eine Sicherungsvorrichtung für eine Leitung gemäß Anspruch 13 gelöst. Die Sicherungsvorrichtung umfasst gemäß der vorliegenden Beschreibung ein Seil, vorzugsweise ein Drahtseil, und eine Verschlussvorrichtung für eine Schlinge des Seils. Die Seilschlinge ist mit Hilfe der Sicherungsvorrichtung vorteilhafterweise kostengünstig, platzsparend und verschiebesicher an der Leitung montierbar. Vorteilhafterweise ist die Seilschlinge auch an "endlosen" Leitungen montierbar, dass heißt, ohne die Notwendigkeit, das Drahtseilende laschen- oder schlingenförmig über ein Leitungsende überschieben zu müssen. Diese Möglichkeit ist insbesondere deshalb wichtig, weil die Fixierung an einer medienführenden Leitung so erfolgen soll, dass diese Leitung nicht getrennt werden muss, was mit Medienaustritt und Maschinenunterbrechung verbunden wäre. Als weiterer Vorteil ist zu erwähnen, dass die Sicherungsvorrichtung für ein größeres Spektrum an Leitungsdurchmessern mit nur einer Größe für die Verschlussvorrichtung verwendbar ist. Dazu dient insbesondere auch das Vorsehen der Innenhülse in der Spannhülse.

Das Seil kann an mindestens einem seiner Enden die besagte Endbegrenzungshülse aufweisen. Die Bohrung der Arretierhülse weist dann an ihrem spannhülsenfernen Ende eine Aufweitung auf zur Aufnahme der an einem ersten Ende des Seiles angebrachten Endbegrenzungshülse. Die Endbegrenzungshülse steht in der Aufnahme mit einem Anschlag in Eingriff; das Seilende mit der Endbegrenzungshülse in der Aufnahme ist auf diese Weise gegen axiales Verschieben gesichert, wenn die Schlinge zugezogen wird. Zusätzlich kann ein Verschiebe-Sicherungsmittel z. B. in Form einer Gewindeschraube vorgesehen sein zum Sichern der Endbegrenzungshülse in der Arretierhülse, wenn die Schlinge gelöst wird.

Die Sicherungsvorrichtung kann darüber hinaus ein Verbindungsmittel aufweisen zum Verbinden eines dem ersten Ende gegenüberliegenden freien zweiten Endes des Seiles mit einem ortsfesten Gegenstand. Das zweite freie Ende ist an der spannhülsenfernen Seite aus der Arretierhülse herausgeführt und lediglich optional bzw. nicht notwendigerweise wieder in die Arretierhülse zurückgeführt und dort befestigt.

Das Seil ist außerhalb der Verschlussvorrichtung, insbesondere im Bereich seiner Schlingen, vorzugsweise zumindest abschnittsweise mit einem Kunststoffschlauch, beispielsweise einem Schlauch aus Polyurethan umhüllt. Der Kunststoffschlauch dient sowohl dem Schutz des Seiles wie auch dem Schutz der von dem Seil umspannten (Hochdruck-)Leitung.

Die oben genannte Aufgabe wird weiterhin durch eine Hochdruckeinrichtung gemäß Anspruch 18 gelöst. Demnach umfasst die Hochdruckeinrichtung eine Leitung und eine Hochdruckarmatur zum Anschluss der Leitung. Die Hochdruckeinrichtung ist gekennzeichnet.durch eine Sicherungsvorrichtung nach einem der Ansprüche 13 bis 17, wobei die Schlinge des Seiles um die Leitung gelegt ist und mit Hilfe der Verschlussvorrichtung nach einem der Ansprüche 1 bis 12 an der Leitung verschiebesicher arretiert ist. Das freie Ende des Seils ist vorzugsweise mit Hilfe eines Verbindungsmittels an der Hochdruckarmatur oder einem anderen ortsfesten Gegenstand angeschlossen.

Das Verbindungsmittel ist beispielsweise in Form einer Öse oder einer Schelle ausgebildet, welche mit der Hochdruckarmatur oder einem anderen ortsfesten Gegenstand auf Zug belastbar verbunden ist. Es kann auch eine zweite erfindungsgemäße oder modifizierte Verschlussvorrichtung vorgesehen sein zum Verschließen einer aus dem freien Ende des Seiles gebildeten zweiten Seilschlinge. Die zweite Seilschlinge kann direkt oder indirekt über das Verbindungsmittel an die Hochdruckarmatur angeschlossen sein. Dann ist sowohl an der Hochdruckarmatur wie auch an der Leitung jeweils eine Schlinge von ein und demselben Seil angebracht und beide Schlingen sind dann jeweils mit einer eigenen erfindungsgemäßen Verschlussvorrichtung gesichert. Die modifizierte Verschlussvorrichtung weist z. B. eine symmetrisch ausgebildete Arretierhülse auf mit beidseitigen Gewindeanschlüssen für zwei gegenüberliegende Spannhülsen. Die modifizierte Verschlussvorrichtung hat dieselbe Funktion wie eine zweite separate einfache erfindungsgemäße Verschlussvorrichtung und ist geeignet, zwei Schlingen eines Seiles erfindungsgemäß sicher zu verschließen.

Die oben genannte Aufgabe wird schließlich durch ein Verfahren zum Montieren der Sicherungsvorrichtung nach einem der Ansprüche 13 bis 17 an einer Leitung, vorzugsweise einem Hochdruckschlauch gelöst. Das Verfahren umfasst die folgenden Schritte: Bereitstellen eines Seiles mit einem ersten und einem zweiten Seilabschnitt, Legen des Seiles mit dem ersten und zweiten Seilabschnitt in Form einer Schlinge um die Leitung; Führen der beiden Seilabschnitte in eine Arretierhülse und eine Spannhülse so, dass die Spannhülse zwischen der Seilschlinge und der Arretierhülse angeordnet ist; Positionieren der Spannhülse vorzugsweise in möglichst geringem Abstand an der Arretierhülse; Zuziehen der Schlinge um die Leitung; Arretieren der beiden Seilabschnitte in der Arretierhülse bei zugezogener Schlinge um die Leitung so, dass die Schlinge nicht gelockert werden kann, und Nachspannen der Seilschlinge um die Leitung durch teilweises Aufschrauben einer Verschraubung zwischen der Arretierhülse und der Spannhülse auf einen größeren Abstand.

Nach dem Nachspannen werden die Spannhülse und die Arretierhülse in ihrer durch vergrößerten Abstand bedingten Relativposition zueinander fixiert, z. B. mit Hilfe von Madenschrauben.

Die Vorteile der Sicherungsvorrichtung, der Hochdruckeinrichtung und des beschriebenen Verfahrens entsprechen den oben mit Bezug auf die Verschlussvorrichtung genannten Vorteilen.

Weitere vorteilhafte Ausgestaltungen sind Gegenstand der abhängigen Ansprüche.

Der Beschreibung sind insgesamt elf Figuren beigefügt, wobei
- Figur 1: die erfindungsgemäße Verschlussvorrichtung und Sicherungsvorrichtung in perspektivischer Ansicht in zusammengebautem Zustand;
- Figur 2a: die erfindungsgemäße Verschlussvorrichtung und Sicherungsvorrichtung in einem Längsschnitt;
- Figur 2b: die erfindungsgemäße Verschlussvorrichtung und Sicherungsvorrichtung gemäß Fig. 2a mit Metallplättchen und weiterem Sicherungsmittel;
- Figur 2c: die erfindungsgemäße Verschlussvorrichtung und Sicherungsvorrichtung in Aufrissdarstellung mit Bohrungen in der Arretierhülse für weiteres Sicherungsmittel sowie für herausgeführtes und wieder hereingeführtes freies Ende des Seiles aus der / in die Arretierhülse;
- Figur 2d: die erfindungsgemäße Verschlussvorrichtung und Sicherungsvorrichtung mit Innenhülse im Querschnitt;
- Figur 2e + f: Aufrissdarstellungen der Innenhülse;
- Figur 3: die Arretierhülse mit Madenschrauben und Halbschalen;
- Figur 4: die erfindungsgemäße Verschlussvorrichtung und Sicherungsvorrichtung in nicht zusammengebautem Zustand;
- Figur 5: die erfindungsgemäße Hochdruckeinrichtung; und
- Figur 6: Variante der in Fig. 1 gezeigten Verschluss- und Sicherungsvorrichtung.
zeigt.

Die Erfindung wird nachfolgend unter Bezugnahme auf die genannten Figuren in Form von Ausführungsbeispielen detailliert beschrieben. In allen Figuren sind gleiche technische Elemente durch gleiche Bezugszeichen bezeichnet.

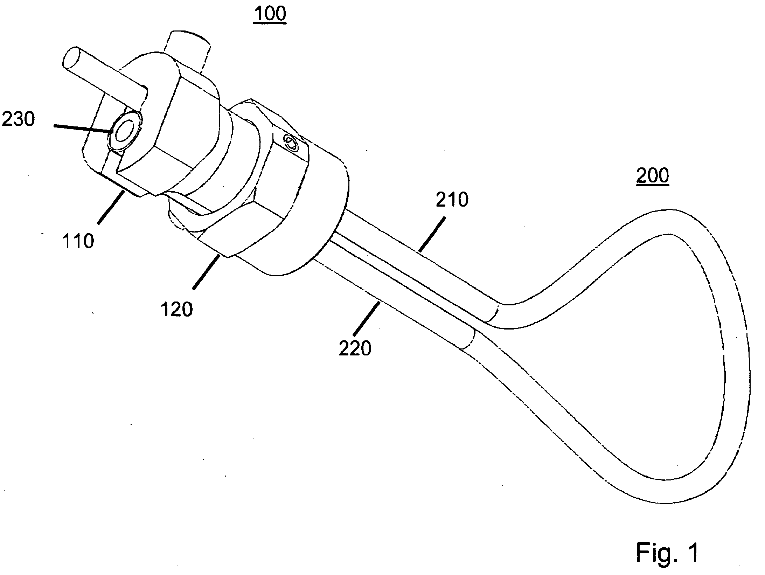

Figur 1 zeigt die erfindungsgemäße Sicherungsvorrichtung. Sie weist ein Seil auf, vorzugsweise ein Drahtseil, mit den beiden Seilabschnitten 210 und 220, welche eine Seilschlinge 200 bilden. Neben dem Seil umfasst die Sicherungsvorrichtung auch eine Verschlussvorrichtung 100, welche aus einer Arretierhülse 110 und einer Spannhülse 120 gebildet ist. Die beiden Seilabschnitte sind durch die beiden Hülsen 110, 120 hindurchgeführt.

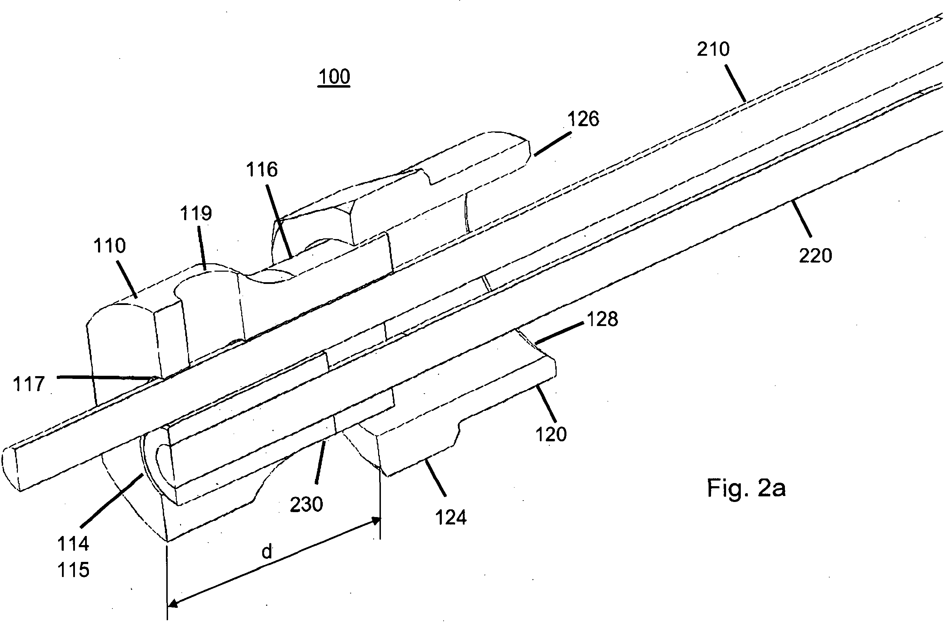

Figur 2a zeigt die erfindungsgemäße Verschlussvorrichtung 100 in einem Längsabschnitt.

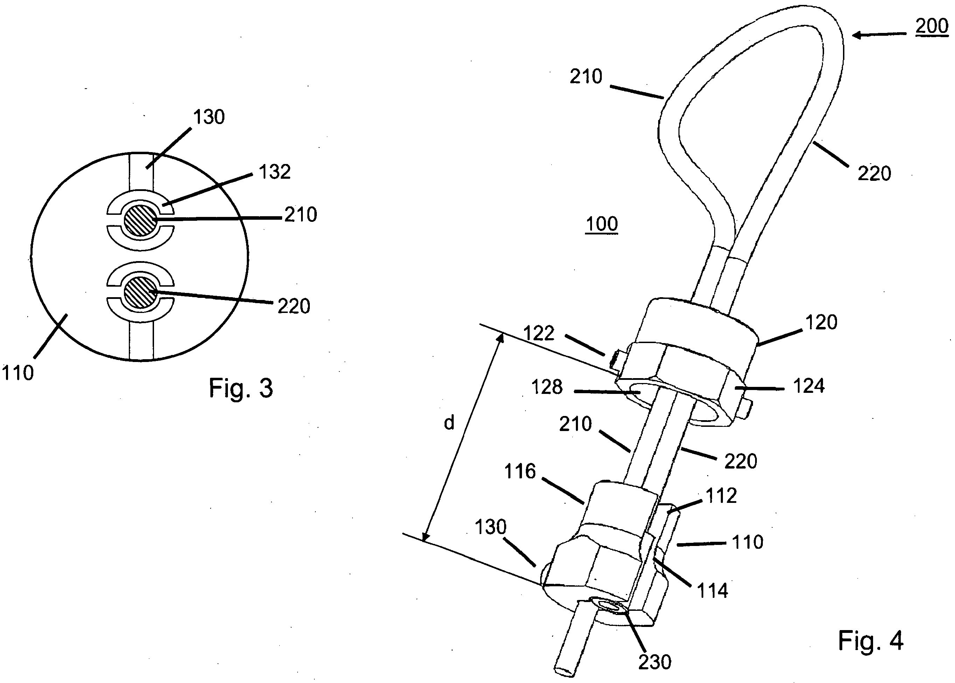

Bei der in Figur 2a gezeigten Arretierhülse 110 sind die beiden Seilabschnitte 210, 220 in separaten Bohrungen 114, 117 geführt. Die Bohrung 114 für den Seilabschnitt 220 weist eine Aufweitung auf, zur Aufnahme einer am Ende des zweiten Seilabschnittes 220 angebrachten Endbegrenzungshülse 230. Die Endbegrenzungshülse 230, welche fest mit dem zweiten Seilabschnitt 220 verbunden ist, verhindert, dass der zweite Seilabschnitt in einer Richtung, in Figur 2a beispielhaft nach rechts, verschiebbar ist und so zu einem unerwünschten Lockern der Schlinge 200, siehe Figur 1, führen könnte. Um auch den ersten Seilabschnitt 210 in der Bohrung 117 der Arretierhülse 110 verschiebesicher zu arretieren und ein Lockern der Schlinge zu verhindern, ist in der Arretierhülse eine Radial- bzw. Querbohrung 119 vorgesehen zum Aufnehmen einer Madenschraube. Diese Querbohrung 119 erstreckt sich bis zu der Bohrung für den ersten Seilabschnitt 210, so dass dieser erste Seilabschnitt 210 mit Hilfe einer Madenschraube 130, siehe Figur 3, in der Arretierhülse verschiebesicher fixiert werden kann.

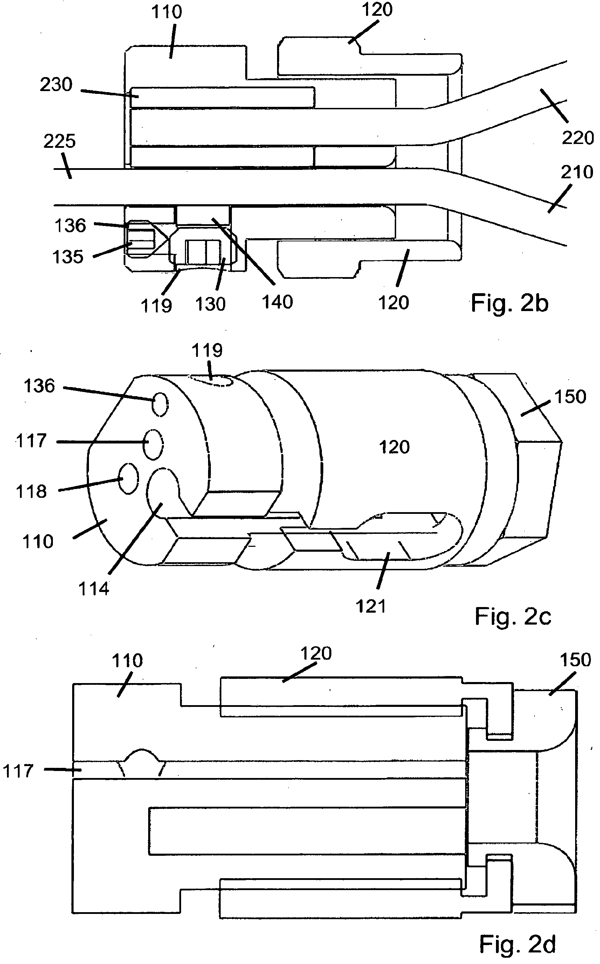

Figur 2b zeigt die erfindungsgemäße Verschlussvorrichtung und Sicherungsvorrichtung ebenfalls in einem Längsschnitt. Ergänzend zu Figur 2a ist insbesondere die Madenschraube als Sicherungsmittel 130 in der Querbohrung 119 zu erkennen. Die Madenschraube 130 wirkt nicht direkt, sondern indirekt über ein Metallplättchen 140, vorzugsweise aus Messing, auf den zu fixierenden Seilabschnitt 210 ein. Bezüglich der Vorteile des Messingplättchens wird auf die obigen Ausführungen im allgemeinen Teil der Beschreibung verwiesen. Durch eine quer zu der Querbohrung 119 angeordnete Gewindebohrung 136 ist ein weiteres Sicherungsmittel 135 in Form einer Gewindeschraube gegen die Madenschraube 130 angestellt, um diese an einem unerwünschten Lösen zu hindern.

Figur 2c zeigt die erfindungsgemäße Verschlussvorrichtung und Sicherungsvorrichtung mit einer Innenhülse 150, welche drehbar in der Spannhülse 120 an deren schlingenseitigem Ende gelagert ist. Bezüglich der Funktion und der Vorteile der Innenhülse wird auf die obigen Erläuterungen im allgemeinen Teil der Beschreibung verwiesen. Bei der Spannhülse ist ein Schlitz mit einer Einlegeöffnung 121 zum Einlegen von mindestens einem der die Schling bildenden Seilabschnitte mit Endbegrenzungshülse zu erkennen.

Figur 2d zeigt die erfindungsgemäße Verschlussvorrichtung und Sicherungsvorrichtung mit der Innenhülse 150 in einem Längsschnitt.

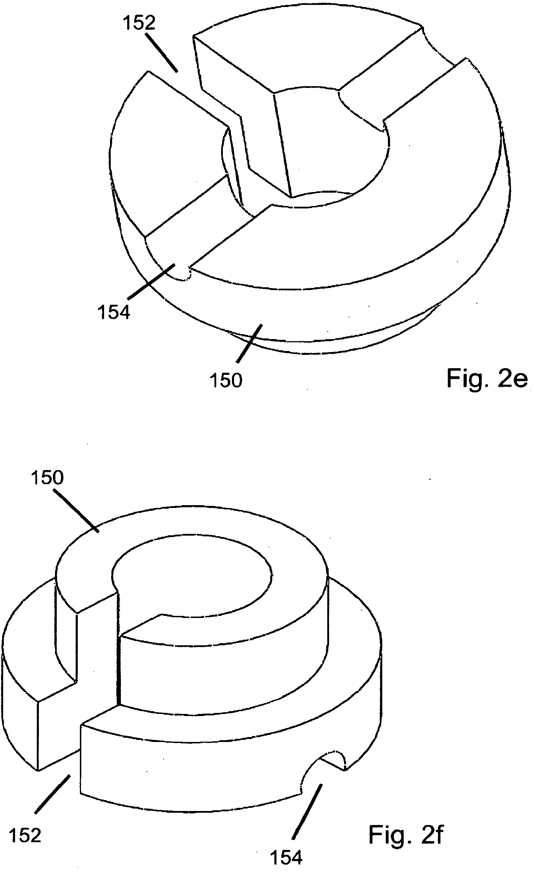

Figuren 2e und 2f zeigen die Innenhülse 150 mit einem Schlitz 152 zum Einlegen der Seilabschnitte der Schlinge und mit Kerben 154 zum Eingreifen der Seilabschnitte, wodurch die Innenhülse 150 an einem Mitdrehen beim Spannen der Seilschlinge durch Drehen der Spannhülse gehindert wird.

Wie in Figur 3 weiterhin gezeigt, weisen die Madenschrauben 130 an ihrer Stirnseite alternativ zu dem Metallplättchen 140 eine Halbschale 132 auf, um die Anpresskraft gegen den Seilabschnitt auf eine größere Anpressfläche zu verteilen und um auf diese Weise eine Beschädigung des Seilabschnittes durch die Madenschrauben zu verhindern.

Die Arretierhülse 110 weist ein Außengewinde 116 auf während die Spannhülse 120 ein komplementäres Innengewinde 128 aufweist. Aufgrund dessen sind die Arretierhülse und die Spannhülse miteinander verschraubbar und in ihrem Abstand d zueinander variabel einstellbar. Zum Verschrauben der Spannhülse 120 gegenüber der Arretierhülse 110 weist die Spannhülse an ihrem äußeren Umfang gemäß Figur 2a und 4 beispielhaft einen Sechskant 124 auf zum Ansetzen von zum Beispiel einem Maulschlüssel als Hebelwerkzeug.

Figur 4 zeigt die erfindungsgemäße Sicherungsvorrichtung mit entkoppelter Arretierhülse 110 und Spannhülse 120. Es sind insbesondere Hülsensicherungsmittel 122 in Form von Madenschrauben am äußeren Umfang der Spannhülse 120 zu erkennen. Diese Hülsensicherungsmittel dienen zum Arretieren der Spannhülse in fester Relativposition, das heißt in festem Abstand d, zu der Arretierhülse, wenn die Spannhülse 120 auf die Arretierhülse 110 aufgeschraubt ist. Alternativ oder zusätzlich zu den Madenschrauben können als Hülsensicherungsmittel auch eine oder mehrere schräg verlaufende kleine runde Einfräsungen in der Vorderseite der Spannhülse vorgesehen sein, die dem Drahtseil als "Einraststelle" dienen. Als Schutz vor dem selbsttätigen Lockern der Verbindung, kann auch zusätzlich oder stattdessen, die Ausgestaltung der Arretierhülse und der Spannhülse mit einem Feingewinde (Steigung 1 mm oder weniger) dienen. Andere Arten von Schraubensicherung, anearobe Kleber, Stifte, oder insbesondere Madenschrauben am Außenbereich des oberen Sechskants oder eine Ausgestaltung mit Elastic-Stop sind auch denkbar. Bevorzugt wird die Spannhülse aus einem weicheren Material als das Drahtseil hergestellt, (z. B. Messing) um eine Beschädigung des letzten zu vermeiden.

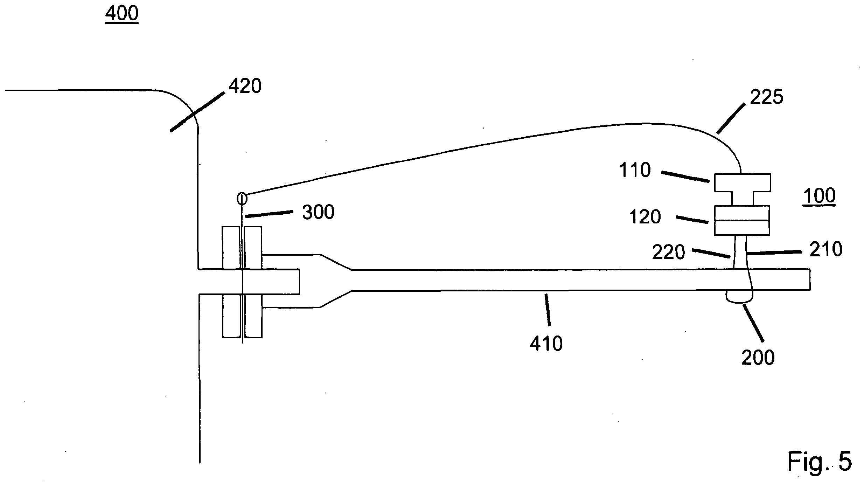

Figur 5 zeigt die erfindungsgemäße Hochdruckeinrichtung 400, welche aus der Leitung 410, vorzugsweise einer Hochdruckleitung 410, einer Hochdruckarmatur und der erfindungsgemäßen Sicherungsvorrichtung besteht.

Das erfindungsgemäße Verfahren zum Montieren der Sicherungsvorrichtung an einer Leitung wird nachfolgend insbesondere unter Bezugnahme auf Figur 5 näher beschrieben.

Ein bereitgestelltes Seil wird mit einem ersten und einem zweiten Seilabschnitt 210 und 220 in Form einer Seilschlinge 200 um eine zu sichernde Leitung 410 gelegt. Die beiden Seilabschnitte 210 und 220 werden dann in die Arretierhülse 110 und die Spannhülse 120 so eingeführt, dass die Spannhülse zwischen der Seilschlinge und der Arretierhülse angeordnet ist.

In einem nachfolgenden Verfahrensschritt wird zunächst die Spannhülse möglichst nahe an der Arretierhülse positioniert bzw. mit dieser verbunden, so dass der Abstand d möglichst gering wird. Je kürzer der Abstand d bei diesem Verfahrensschritt eingestellt wird, desto mehr Weg steht - bei begrenzter Länge des Außengewindes 116 - später für das Nachspannen zur Verfügung. Die Seilschlinge 200 um die Leitung 410 wird zunächst beispielsweise nur von Hand zugezogen, indem an dem Seilabschnitt 210 gezogen wird. Nachfolgend werden die beiden Seilabschnitte 210, 220 in der Arretierhülse 110 verschiebesicher fixiert, zum Beispiel mit Hilfe von Madenschrauben oder mit Hilfe der besagten Endbegrenzungshülse.

Um die Seilschlinge tatsächlich verschiebesicher an der Leitung 410 zu arretieren, damit sie sich im Falle einer Störung nicht von der Leitung 410 löst, wird die Seilschlinge nachgespannt. Dazu wird der Abstand zwischen den Abstand d zwischen der Arretierhülse 110 und der Spannhülse 120 vergrößert, indem die beiden Hülsen entsprechend aufgeschraubt werden.

Für den Anwender ist es empfehlenswert, wenn der vordere Bereich des Außengewindes 116 farblich abgesetzt ist, um als Warnbereich zu fungieren, über den hinaus die Spannhülse beim Spannen nicht hinausgedreht werden sollte. Ist bei dem Spannvorgang diese Stelle erreicht, aber die gewünschte Anzugsfestigkeit ist noch nicht erreicht (z. B. weil sich das Drahtseil gelängt hat o. ä.), so besteht die Möglichkeit des "Nachspannens" indem die Montageschritte ab dem ersten handfesten Fixieren der Schlinge mittels Imbusschraube wiederholt werden.

Es ist ebenfalls denkbar, dass das eingelegte Drahtseil über diese farblich abgesetzte Markierung verfügt, welche durch den Einlegschlitz 112 erkennbar wäre.

Um zu verhindern, dass dabei die Seilabschnitte 210, 220 durch einen Grad an der schlingenseitigen Öffnung der Bohrung in der Spannhülse 120 beschädigt werden, weist diese schlingenseitige Öffnung der Bohrung vorzugsweise eine Radius- oder Konus-Senkung 126 auf. Vorteilhafterweise weist auch die schlingenferne Öffnung der Bohrung in der Arretierhülse 110 eine Senkung 115 auf, um eine Beschädigung des aus der Arretierhülse austretenden Seilabschnittes zu verhindern, wenn dieser Seilabschnitt im Falle einer Störung mit Kräften beaufschlagt wird, welche quer zur Längsrichtung der Bohrung in der Arretierhülse wirken.

Vor oder nach dem Nachspannen der Seilschlinge wird das freie Ende 225 des Seiles vorzugsweise mit Hilfe eines Verbindungsmittels 300, zum Beispiel in Form einer Öse an einem ortsfesten Gegenstand, zum Beispiel der Hochdruckarmatur 420 der Hochdruckeinrichtung 400 befestigt.

Im Falle einer auftretenden Störung, dass heißt wenn sich die Leitung 410 von der Hochdruckarmatur 420 im Betriebszustand unter Hochdruck lösen sollte, wird durch die erfindungsgemäße Sicherungsvorrichtung sichergestellt, dass das gelöste Ende der Hochdruckleitung keinen allzu großen Schaden anrichtet, weil es sich nur in dem Maße von der Hochdruckeinrichtung 400 entfernen kann, wie das Seil bzw. das Fangseil es zulässt. Mit Hilfe der erfindungsgemäßen Verschlussvorrichtung ist sichergestellt, dass das Seil bzw. Fangseil durch einfache unkomplizierte Montage verschiebesicher an der Leitung 410 fixierbar ist und sich auch bei Zugbelastung nicht von der Leitung lösen kann. Dies wird auch, insbesondere bei elastomeren Leitungen, dadurch gewährleistet, dass sich die Kante der schlingenseitigen Bohrung der Spannhülse bei Auftreten einer Zugbelastung quer zur Längsachse der Bohrung in der Oberfläche der Leitung festkrallt. Es ist jedoch wichtig darauf hinzuweisen, dass die eigentliche Sicherheit des Systems im Falle einer Belastung ausschließlich durch den Schlingeneffekt erreicht wird, der sich bei Belastung sogar noch verstärken würde, auch wenn die Spannhülse nicht ordnungsgemäß an der Arretierhülse gesichert wäre. Der Schlingeneffekt meint, dass sich die Schlinge im Belastungsfall automatisch weiter zuzieht, wenn zwar ein erster Teilabschnitt des Seiles verschiebesicher z. B. mit Hilfe der Endbegrenzungshülse, in der Arretierhülse fixiert ist, der zweite Seilabschnitt jedoch nicht. Die Spannhülse und die Madenschrauben haben ausschließlich die Kräfte zu halten, die zum Spannen zwecks Verschiebungssicherung notwendig sind; diese Kräfte sind vergleichweise gering.

Eine Gummiumlage um die anfixierte Leitung zum Oberflächenschutz derselben ist ebenfalls denkbar und würde die Festigkeit der Verbindung kaum beeinträchtigen.

Die Gesamtkonstruktion bringt weiterhin den Vorteil mit sich, dass die Endbegrenzungshülse 230 im Falle einer Störung nicht die gesamte Zugkraft bei einer Abrissbelastung der Leitung aufnehmen muss, sondern dass die Konstruktion an dieser Stelle in erster Linie durch "Reibung" des fest angezogenen Seiles am Umfang der Leitung gehalten wird. Das verleiht der Gesamtkonstruktion eine insgesamt hohe Festigkeit. Es wird eine Belastungssicherheit erreicht, welche der Bruchlast des Drahtseils entspricht.

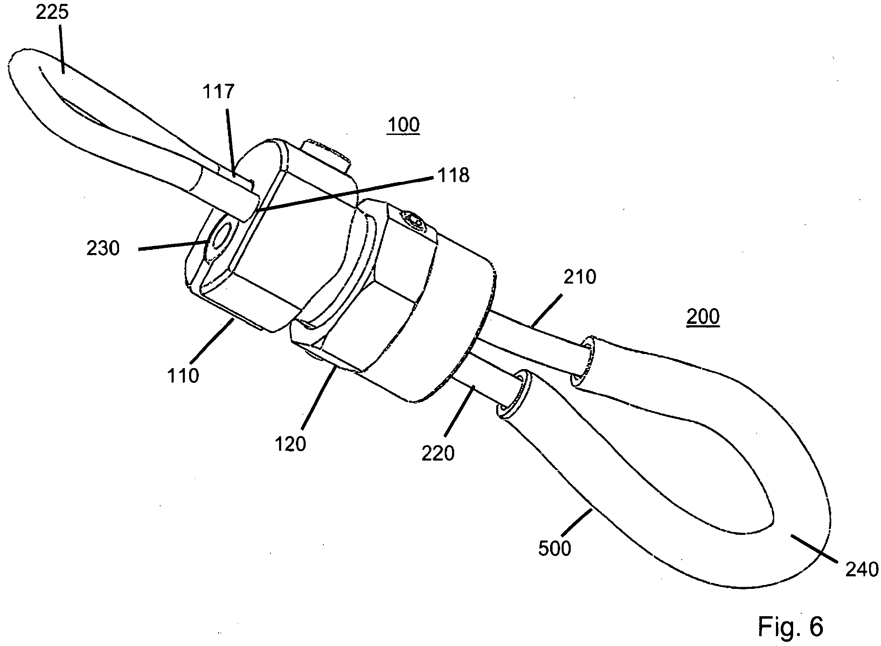

Figur 6 zeigt zum einen einen Kunststoffschlauch 500, welcher zu Schutzzwecken beispielhaft um die Seilschlinge 200 gelegt ist. Zum anderen ist bei dem in Figur 6 gezeigten Ausführungsbeispiel das freie Ende 225 des Seiles zu einer zweiten Seilschlinge geformt und wieder in die Arretierhülse 110 zurückgeführt und dort als dritter Seilabschnitt in einer eigenen Bohrung oder in einer gemeinsamen Bohrung mit dem ersten und zweiten Seilabschnitt fixiert.

### Bezugszeichenliste

- 100: Verschlussvorrichtung
- 110: Arretierhülse
- 112: Schlitz
- 114: Bohrung für Seilabschnitt
- 115: Senkung
- 116: Außengewinde
- 117: Bohrung für Seilabschnitt
- 119: Querbohrung
- 120: Spannhülse
- 122: Hülsensicherungsmittel, z. B. Madenschraube
- 124: Sechskant
- 126: Senkung
- 128: Innengewinde
- 130: Seil-Sicherungsmittel, z. B. Madenschraube
- 132: Halbschalen
- 135: weiteres Sicherungsmittel, z. b. weitere Gewindeschraube
- 136: Bohrung für weiteres Sicherungsmittel
- 140: Metallplättchen
- 150: Innenhülse
- 152: Schlitz in Innenhülse
- 154: Kerbe
- 200: Seilschlinge
- 210: Seilabschnitt
- 220: Seilabschnitt
- 225: freies Ende
- 230: Endbegrenzungshülse
- 240: Wendepunkt der Seilschlinge
- 300: Verbindungsmittel
- 400: Hochdruckeinrichtung
- 410: Hochdruckschlauch, Leitung
- 420: Hochdruckarmatur
- 500: Kunststoffschlauch
- d: Abstand

## Patentansprüche

1. Verschlussvorrichtung (100) für mindestens eine Schlinge (200) eines Seiles, wobei die Seilschlinge (200) aus einem ersten und zweiten Seilabschnitt (210, 220), gebildet ist und wobei die Verschlussvorrichtung aufweist:
eine Arretierhülse (110) durch welche der erste und der zweite Seilabschnitt (210, 220) hindurchführbar sind; und
eine Spannhülse (120) durch welche der erste und der zweite Seilabschnitt (210, 220) hindurchführbar sind,
wobei die Arretierhülse (110) mit einem Außengewinde (116) und Spannhülse (120) mit einem komplementären Innengewinde (128) ausgebildet ist oder umgekehrt, so dass beide Hülsen miteinander verschraubbar sind,
**dadurch gekennzeichnet, dass**
die Arretierhülse und die Spannhülse - mit durch beide Hülsen hindurchgeführten Seilabschnitten - in variabel einstellbarer Relativposition zueinander fixierbar sind zum Nachspannen der Seilschlinge (200) um eine Leitung (410) durch teilweises Aufschrauben der Verschraubung zwischen der Arretierhülse (110) und der Spannhülse (120) auf einen größeren Abstand (d); und
Seil-Sicherungsmittel (130) vorgesehen sind zum Arretieren des ersten und des zweiten Seilabschnittes (210, 220) in der Arretierhülse (110) so, dass sich die Seilschlinge nicht lockert.

2. Verschlussvorrichtung (100) nach Anspruch 1,
**dadurch gekennzeichnet, dass**
die Arretierhülse (110) und/oder die Spannhülse (120) jeweils getrennte Bohrungen (114, 117) für den ersten und den zweiten Seilabschnitt (210,

3. Verschlussvorrichtung (100) nach Anspruch 1,
**dadurch gekennzeichnet, dass**
die Arretierhülse (110) und/oder die Spannhülse (120) eine gemeinsame Bohrung für den ersten und den zweiten Seilabschnitt (210, 220) sowie optional auch für einen dritten Seilabschnitt aufweisen.

4. Verschlussvorrichtung (100) nach Anspruch 2 oder 3,
**dadurch gekennzeichnet, dass**
die Arretierhülse (110) und/oder die Spannhülse (120) in Längsrichtung der Bohrung (114, 117) einen Schlitz oder mehrere Schlitze (112) aufweist, welcher / welche mit der mindestens einen Bohrung kommuniziert / kommunizieren, zum Einlegen von zumindest einem der Seilabschnitte (210, 220) in die Bohrung der Hülse.

5. Verschlussvorrichtung (100) nach einem der Ansprüche 2 bis 4,
**dadurch gekennzeichnet, dass**
die Seil-Sicherungsmittel (130) in Form von mindestens einer Madenschraube ausgebildet sind, welche quer zur Längsachse der Bohrung radial bis in die mindestens eine Bohrung der Arretierhülse (110) einschraubbar ist zum Festklemmen der Seilabschnitte (210, 2320) in der mindestens einen Bohrung.

6. Verschlussvorrichtung (100) nach Anspruch 5,
**dadurch gekennzeichnet, dass**
ein Plättchen (140) aus einem Metall mit einer geringeren Härte als Stahl, vorzugsweise aus Messing, zwischen die Stirnseite der Madenschraube und den festzuklemmenden Seilabschnitt gelegt ist.

7. Verschlussvorrichtung (100) nach einem der vorangegangenen Ansprüche,
**dadurch gekennzeichnet, dass**
die mindestens eine Bohrung (114, 117) der Arretierhülse (110) an ihrem schlingenfernen Ende eine Aufweitung aufweist zur Aufnahme einer Endbegrenzungshülse (230) an einem Ende des Seils.

8. Verschlusssicherung (100) nach einem der vorangegangenen Ansprüche,
**dadurch gekennzeichnet, dass**
Hülsensicherungsmittel (122), zum Beispiel ebenfalls in Form von Madenschrauben (122, 130), vorgesehen sind, zum Sichern der Arretierhülse (110) und der Spannhülse (120) in einer bestimmten Relativposition zueinander.

9. Verschlussvorrichtung (100) nach einem der vorangegangene Ansprüche,
**gekennzeichnet durch**
weitere Sicherungsmittel (135), z. B. in Form von Gewindestiften, zum Sichern der Seil-Sicherungsmittel (130) und / oder der Hülsen Sicherungsmittel (122).

10. Verschlussvorrichtung (100) nach einem der vorangegangenen Ansprüche,
**gekennzeichnet durch**
eine Innenhülse (150) zum Einsetzen in das schlingenseitige Ende der Spannhülse und zum Durchführen des ersten und des zweiten Seilabschnitts (210, 220).

11. Verschlussvorrichtung (100) nach einem der vorangegangenen Ansprüche,
**dadurch gekennzeichnet, dass**
die mindestens eine Bohrung in der Spannhülse (120) oder in der Innenhülse (150) an ihrem schlingenseitigen Ende und / oder die mindestens eine Bohrung (114, 117) in der Arretierhülse (110) an ihrem schlingenfernen Ende eine Senkung (115, 126) aufweisen.

12. Verschlussvorrichtung (100) nach einem der vorangegangenen Ansprüche,
**dadurch gekennzeichnet, dass**
am Umfang der Arretierhülse (110) und / oder der Spannhülse (120) und/oder der Innenhülse (150) ein Sechskant (124), ein 2-Flach, Hakenlöcher und / oder ein Rändelrand ausgebildet ist.

13. Sicherungsvorrichtung für eine Leitung, aufweisend:
ein Seil;
eine Verschlussvorrichtung (100) nach einem der vorangegangenen Ansprüche für mindestens eine Schlinge (200) des Seils, welche um die Leitung legbar ist.

14. Sicherungsvorrichtung nach Anspruch 13,
**gekennzeichnet durch**
ein Verbindungsmittel (300) zum Verbinden eines schlingenfernen freien Endes des Seiles mit einem ortsfesten Gegenstand.

15. Sicherungsvorrichtung nach Anspruch 13 oder 14;
**dadurch gekennzeichnet, dass**
es sich bei dem Seil um ein Drahtseil handelt.

16. Sicherungsvorrichtung nach einem der Ansprüche 13 bis 15,
**dadurch gekennzeichnet, dass**
das Seil an einem Ende eine Endbegrenzungshülse (230) aufweist; und die Bohrung (114) der Arretierhülse (110) an ihrem schlingenfernen Ende eine Aufweitung aufweist zur Aufnahme der Endbegrenzungshülse.

17. Sicherungsvorrichtung nach einem der Ansprüche 13 bis 16,
**gekennzeichnet durch**
einen Kunststoffschlauch (500), welcher die Seilschlinge umgibt.

18. Hochdruckeinrichtung (400) mit:
einer Leitung (410); und
einer Hochdruckarmatur (420) zum Anschluss der Leitung;
**gekennzeichnet durch**
mindestens eine Sicherungsvorrichtung nach einem der Ansprüche 13 bis 17, wobei die Schlinge (200) des Seils um die Leitung (410) gelegt ist und mit Hilfe der Verschlussvorrichtung (100) nach einem der Ansprüche 1 bis 12 an der Leitung verschiebesicher arretiert ist; und
wobei ein freies Ende (225) des Seiles vorzugsweise mit Hilfe eines Verbindungsmittels (300) oder mit Hilfe einer weiteren Sicherungsvorrichtung nach einem der Ansprüche 13 bis 17 an der Hochdruckarmatur (420) oder einem anderen ortsfesten Gegenstand angeschlossen ist.

19. Hochdruckeinrichtung (400) nach Anspruch 18,
**dadurch gekennzeichnet, dass**
das Verbindungsmittel (300) in Form einer Öse oder Schelle, welche mit der Hochdruckarmatur (420) oder dem anderen ortsfesten Gegenstand in Eingriff steht, ausgebildet ist.

20. Verfahren zum Montieren der Sicherungsvorrichtung nach einem der Ansprüche 13 bis 17 an einer Leitung (410), umfassend folgende Schritte:
Bereitstellen eines Seiles
Legen des Seiles mit dem ersten und dem zweiten Seilabschnitt in Form einer Schlinge (200) um die Leitung;
Einführen der beiden Seilabschnitte in eine Arretierhülse (110) und eine Spannhülse (120) so, dass die Spannhülse (120) zwischen der Seilschlinge und der Arretierhülse (110) angeordnet ist;
Positionieren der Spannhülse vorzugsweise möglichst nah an der Arretierhülse (110);
Zuziehen der Schlinge (200) um die Leitung;
Arretieren der beiden Seilabschnitte in der Arretierhülse (110) bei zugezogener Schlinge (200) um die Leitung zumindest so, dass die Schlinge (200) nicht gelockert werden kann; und
Nachspannen der Seilschlinge (200) um die Leitung (410) durch teilweises Aufschrauben einer Verschraubung zwischen der Arretierhülse (110) und der Spannhülse (120) auf einen größeren Abstand (d).

21. Verfahren nach Anspruch 20;
**dadurch gekennzeichnet, dass**
- wenn der zweite Seilabschnitt (220) eine Endbegrenzungshülse (230) aufweist - der Schritt des Einführens des Seilabschnittes in die Arretierhülse (110) folgende Schritte umfasst:
Führen des Endbegrenzungshülsen-fernen Endes des Seiles durch die Bohrung der Arretierhülse (110) und Einziehen der Endbegrenzungshülse in eine für die Endbegrenzungshülse passende Aufweitung der Bohrung.

22. Verfahren nach einem der Ansprüche 20 oder 21,
**dadurch gekennzeichnet, dass**
das Verfahren nach dem Nachspannen noch folgenden Verfahrensschritt aufweist:
Verbinden des freien Endes des Seiles, welches der um die Leitung gelegten Schlinge abgewandt ist, mit einem ortsfesten Gegenstand.

## Claims

1. A closure device (100) for at least one sling (200) of a cable, wherein the cable sling (200) is formed from a first cable section and a second cable section (210, 220), and wherein the closure device comprises:
a locking sleeve (110), through which the first and second cable sections (210, 220) can be fed; and
a clamping sleeve (120), through which the first and second cable sections (210, 220) can be fed,
wherein the locking sleeve (110) is formed with an external thread (116) and the clamping sleeve (120) is formed with a complimentary internal thread (128), or vice versa, so that the two sleeves can be screwed together,
**characterized in that**
the locking sleeve and the clamping sleeve, with the cable sections which are fed through both sleeves, are fixable in variably adjustable relative positions to each other for reclamping the cable sling (200) around a line (410) by partially unscrewing the screw connection between the locking sleeve (110) and the clamping sleeve (120) to a greater distance (d); and
cable securing means (130) are provided for locking the first and second cable sections (210, 220) in the locking sleeve (110) in such a manner that the cable sling will not loosen.

2. The closure device (100) according to claim 1,
**characterized in that**
the locking sleeve (110) and/or the clamping sleeve (120) each comprise/comprise separate bores (114, 117) for the first and second cable sections (210, 220) and optionally also for a third cable section.

3. The closure device (100) according to claim 1,
**characterized in that**
the locking sleeve (110) and/or the clamping sleeve (120) comprise/comprises a common bore for the first and second cable sections (210, 220) and optionally also for a third cable section.

4. The closure device (100) according to claim 2 or 3,
**characterized in that**
the locking sleeve (110) and/or the clamping sleeve (120) comprise/comprises one slot or more slots (112) which extends/extend in the longitudinal direction of the bore (114, 117) and which communicates/communicate with the at least one bore, for insertion of at least one of the cable sections (210, 220) into the bore of the sleeve.

5. The closure device (100) according to any one of claims 2 to 4,
**characterized in that**
the cable securing means (130) is configured in the form of at least one headless screw, which can be screwed radially, i.e., transversely to the longitudinal axis of the bore up into the at least one bore of the locking sleeve (110) for fixedly clamping the cable sections (210, 220) in the at least one bore.

6. The closure device (100) according to claim 5,
**characterized in that**
a small plate (140) from a metal having a lower hardness than steel, preferably from brass, is placed between the front end of the headless screw and the cable section to be fixedly clamped.

7. The closure device (100) according to any one of the preceding claims,
**characterized in that**
the at least one bore (114, 117) of the locking sleeve (110) has a widened area at its end distant from the sling for accommodating an end-stop sleeve (230) on one end of the cable.

8. The closure device (100) according to any one of the preceding claims,
**characterized in that**
sleeve securing means (122), for example likewise in the form of headless screws (122, 130), are provided for securing the locking sleeve (110) and the clamping sleeve (120) in a certain relative position to one another.

9. The closure device (100) according to any one of the preceding claims,
**characterized by**
further securing means (135), e.g. in the form of threaded pins, for securing the cable-securing means (130) and/or the sleeve-securing means (122).

10. The closure device (100) according to any one of the preceding claims,
**characterized by**
an inner sleeve (150) for inserting into the clamping sleeve end on the sling side and for feeding through the first and second cable sections (210, 220).

11. The closure device (100) according to any one of the preceding claims,
**characterized in that**
at its end on the sling side, the at least one bore in the clamping sleeve (120) or in the inner sleeve (150) and/or, at its end distant from the sling, the at least one bore (114, 117) in the locking sleeve (110) comprise/comprises a countersink (115, 126).

12. The closure device (100) according to any one of the preceding claims,
**characterized in that**
a hexagonal section (124), a dihedral flat section, holes for hooks, and/or a knurled edge are/is formed on the circumference of the locking sleeve (110) and/or the clamping sleeve (120) and/or the inner sleeve (150).

13. A securing device for a line, comprising:
a cable;
a closure device (100) according to any one of the preceding claims for at least one cable sling (200) which can be placed around the line.

14. The securing device according to claim 13,
**characterized by**
a connecting means (300) for connecting a free cable end that is distant from the sling to a stationary object.

15. The securing device according to claim 13 or 14,
**characterized in that**
the cable is a wire cable.

16. The securing device according to any one of claims 13 to 15,
**characterized in that**
the cable has an end-stop sleeve (230) at one end; and the bore (114) of the locking sleeve (110) has a widened area at its end distant from the sling for accommodating the end-stop sleeve.

17. The securing device according to any one of the claims 13 to 16,
**characterized by**
a plastic hose (500) that surrounds the cable sling.

18. A high-pressure device (400), comprising:
a line (410); and
a high-pressure fitting (420) for connecting the line;
**characterized by**
at least one securing device according to any one of claims 13 to 17, wherein the sling (200) of the cable is placed around the line (410) and is immovably locked in place on the line by means of the closure device (100) according to any one of claims 1 to 12; and
wherein a free end (225) of the cable is preferably connected to the high-pressure fitting (420) or another stationary object by means of a connecting means (300) or by means of another securing device according to any one of claims 13 to 17.

19. The high-pressure device (400) according to claim 18,
**characterized in that**
the connecting means (300) is configured in the form of an eyelet or clamp which engages with the high-pressure fitting (420) or the other stationary object.

20. A method for mounting the securing device according to any one of claims 13 to 17 on a line (410), comprising the following steps:
providing a cable;
placing the cable with the first and second sections, which are in the form of a sling (200), around the line;
feeding the two cable sections into a locking sleeve (110) and a clamping sleeve (120) in such a manner that the clamping sleeve (120) is arranged between the cable sling and the locking sleeve (110);
positioning the clamping sleeve as close as possible to the locking sleeve (110);
pulling the sling (200) tight around the line;
locking the two cable sections in the locking sleeve (110) while the sling (200) is tightened around the line at least in such a manner that the sling (200) cannot be loosened; and
reclamping the cable sling (200) around the line (410) by partially unscrewing a screw connection between the locking sleeve (110) and the clamping sleeve (120) to a greater distance (d).

21. The method according to claim 20,
**characterized in that**
when the second cable section (220) has an end-stop sleeve (230), the step of inserting the cable section into the locking sleeve (110) comprises the following steps:
feeding the cable end that is distant from the end-stop sleeve through the bore of the locking sleeve (110) and pulling the end-stop sleeve into a widened area of the bore which fits for the end-stop sleeve.

22. The method according to any one of claims 20 and 21,
**characterized in that**
the method for reclamping further comprises the following method step:
connecting the free cable end that faces away from the sling placed around the line to a stationary object.

## Revendications

1. Dispositif de fermeture (100) pour au moins une boucle (200) d'un câble, pour lequel la boucle de câble (200) est constituée d'une première et d'une deuxième section de câble (210, 220) et pour lequel le dispositif de fermeture comporte :
un manchon de blocage (110) à travers lequel la première et la deuxième section de câble (210, 220) peuvent être passées, et
un manchon de serrage (120) à travers lequel la première et la deuxième section de câble (210, 220) peuvent être passées,
pour lequel le manchon de blocage (110) est constitué avec un filetage extérieur (116) et le manchon de serrage (120) avec un filetage intérieur complémentaire (128) ou inversement de sorte que les deux manchons peuvent être vissés l'un avec l'autre,
**caractérisé en ce que**
le manchon de blocage et le manchon de serrage (avec les sections de câble passées à travers les deux manchons) peuvent être fixés l'un à l'autre dans une position relative réglable de façon variable pour resserrer la boucle de câble (200) autour d'un conduit (410) en vissant partiellement le raccord à vis entre le manchon de blocage (110) et le manchon de serrage (120) sur une distance plus grande (d), et
des moyens de fixation de câble (130) sont prévus pour bloquer la première et la deuxième section de câble (210, 220) dans le manchon de blocage (110) de sorte que la boucle de câble ne se desserre pas.

2. Dispositif de fermeture (100) selon la revendication 1,
**caractérisé en ce que**
le manchon de blocage (110) et/ou le manchon de serrage (120) comportent respectivement des trous séparés (114, 117) pour la première et la deuxième section de câble (210, 220) ainsi qu'en option également pour une troisième section de câble.

3. Dispositif de fermeture (100) selon la revendication 1,
**caractérisé en ce que**
le manchon de blocage (110) et/ou le manchon de serrage (120) comportent un trou commun pour la première et la deuxième section de câble (210, 220) ainsi qu'en option également pour une troisième section de câble.

4. Dispositif de fermeture (100) selon la revendication 2 ou 3,
**caractérisé en ce que**
le manchon de blocage (110) et/ou le manchon de serrage (120) comportent dans le sens longitudinal du trou (114, 117) une fente ou plusieurs fentes (112) laquelle/lesquelles communique(nt) avec au moins un trou pour introduire au moins une des sections de câble (210, 220) dans le trou du manchon.

5. Dispositif de fermeture (100) selon l'une quelconque des revendications 2 à 4,
**caractérisé en ce que**
les moyens de fixatio de câble (130) sont constitués sous la forme d'au moins une vis sans tête, laquelle peut être vissée transversalement à l'axe longitudinal du trou de manière radiale jusque dans au moins un trou du manchon de blocage (110) pour serrer fermement les sections de câble (210, 220) dans au moins un trou.

6. Dispositif de fermeture (100) selon la revendication 5,
**caractérisé en ce qu'**
une plaquette (140) dans un métal avec une dureté plus faible que l'acier de préférence en laiton, est posée entre la face avant de la vis sans tête et la section de câble à serrer fermement.

7. Dispositif de fermeture (100) selon l'une quelconque des revendications précédentes,
**caractérisé en ce qu'**
au moins un trou (114, 117) du manchon de blocage (110) comporte un élargissement sur son extrémité éloignée de la boucle pour recevoir un manchon de limitation de fin de course (230) sur une extrémité du câble.

8. Dispositif de fermeture (100) selon l'une quelconque des revendications précédentes,
**caractérisé en ce que**
des moyens de fixation de manchon (122) sont prévus, par exemple également sous la forme de vis sans tête (122, 130), pour fixer le manchon de blocage (110) et le manchon de serrage (120) dans une certaine position relative l'un par rapport à l'autre.

9. Dispositif de fermeture (100) selon l'une quelconque des revendications précédentes,
**caractérisé par**
d'autres moyens de fixation (135), par exemple sous la forme de tiges filetées, pour fixer les moyens de fixation de câble (130) et/ou des moyens de fixation de manchon, (122).

10. Dispositif de fermeture (100) selon l'une quelconque des revendications précédentes,
**caractérisé par**
un manchon intérieur (150) pour l'introduction dans l'extrémité côté boucle du manchon de serrage et pour le passage de la première et la deuxième section de câble (210,220).

11. Dispositif de fermeture (100) selon l'une des revendications précédentes,
**caractérisé en ce qu'**
au moins un trou dans le manchon de serrage (120) ou dans le manchon intérieur (150) sur son extrémité côté boucle et/ou au moins un trou (114, 117) dans le manchon de blocage (110) sur son extrémité éloignée de la boucle comportent un lamage (115, 126).

12. Dispositif de fermeture (100) selon l'une quelconque des revendications précédentes,
**caractérisé en ce qu'**
un six pans (124), des trous de crochet à 2 plats et/ou un bord moleté sont constitués sur la périphérie du manchon de blocage (110) et/ou du manchon de serrage (120) et/ou du manchon intérieur (150).

13. Dispositif de fermeture pour un conduit comportant:
un câble,un dispositif de fermeture (100) selon l'une quelconque des revendications précédentes pour au moins une boucle (200) du câble, laquelle peut être posée autour du conduit.

14. Dispositif de fermeture selon la revendication 13,
**caractérisé par**
un moyen de raccordement (300) pour raccorder une extrémité du câble libre éloignée de la boucle avec un objet fixe.

15. Dispositif de fermeture selon la revendication 13 ou 14,
**caractérisé en ce que**
concernant le câble, il s'agit d'un câble métallique.

16. Dispositif de fermeture selon l'une quelconque des revendications 13 à 15,
**caractérisé en ce que**
le câble comporte à une extrémité un manchon de limitation de fin de course (230) et le trou (114) du manchon de blocage (110) comporte un élargissement à son extrémité éloignée de la boucle pour recevoir le manchon de limitation de fin de course.

17. Dispositif de fixation selon l'une quelconque des revendications 13 à 16,
**caractérisé par**
un flexible en matière synthétique (500), lequel entoure la boucle de câble.

18. Dispositif à haute pression (400) avec :
un conduit (410), et
une armature à haute pression (420) pour raccordement du conduit
**caractérisé par**
au moins un dispositif de fixation selon l'une quelconque des revendications 13 à 17, pour lequel la boucle (200) du câble est posée autour du conduit (410) et bloqué contre tout déplacement sur le conduit à l'aide du dispositif de fermeture (100) selon l'une quelconque des revendications 1 à 12, et
pour lequel une extrémité libre (225) du câble est raccordée de préférence à l'aide d'un moyen de raccordement (300) ou à l'aide d'un autre dispositif de fixation selon l'une quelconque des revendications 13 à 17 à l'armature à haute pression (420) ou à un objet fixe.

19. Dispositif à haute pression (400) selon la revendication 18,
**caractérisé en ce que**
le moyen de raccordement (300) est constitué sous la forme d'un anneau ou collier, lequel se trouve en prise avec l'armature à haute pression (420) ou l'autre objet fixe.

20. Procédé pour le montage du dispositif de fixation sur un conduit (410) selon l'une quelconque des revendications 13 à 17, comprenant les étapes suivantes:
préparation d'un câble,
pose du câble avec la première et la deuxième section de câble sous la forme d'une boucle (200) autour du conduit,
introduction des deux sections de câble dans un manchon de blocage (110) et un manchon de serrage (120) de telle manière que le manchon de serrage (120) est disposé entre la boucle de câble et le manchon de blocage (110),
positionnement du manchon de serrage, de préférence si possible proche du manchon de blocage (110),
serrage de la boucle (200) autour du conduit,
blocage de deux sections de câble dans le manchon de blocage (110) avec la boucle serrée (200) autour du conduit au moins de telle manière que la boucle (200) ne puisse pas être desserrée, et
resserrage de la boucle de câble (200) autour du conduit (410) par vissage partiel d'un raccord à vis entre le manchon de blocage (110) et le manchon de serrage (120) sur une distance plus grande (d).

21. Procédé selon la revendication 20,
**caractérisé en ce que**
si la deuxième section de câble (220) comporte un manchon de limitation de fin de course (230), l'étape de l'introduction de la section de câble dans le manchon de blocage (110) comprend les étapes suivantes :
passage de l'extrémité éloignée du manchon de limitation de fin de course du câble par le trou du manchon de blocage (110) et insertion du manchon de limitation de fin de course dans un élargissement du trou s'adaptant au manchon de limitation de fin de course.

22. Procédé selon l'une quelconque des revendications 20 ou 21,
**caractérisé en ce que**
le procédé après le resserrage comporte encore l'étape de procédé suivante :
raccordement de l'extrémité libre du câble à un objet fixe, laquelle est opposée à la boucle posée autour du conduit
